Europäisches Patentamt

European Patent Office

Office européen des brevets

(11) Publication number: **0 225 087 B1**

# EUROPEAN PATENT SPECIFICATION

(45) Date of publication of patent specification: **24.06.92**  (51) Int. Cl.5: **C04B 35/58**

(21) Application number: **86308828.2**

(22) Date of filing: **12.11.86**

(54) **Production of silicon nitride sintered body.**

(30) Priority: **18.11.85 JP 256805/85**

(43) Date of publication of application:
**10.06.87 Bulletin 87/24**

(45) Publication of the grant of the patent:
**24.06.92 Bulletin 92/26**

(84) Designated Contracting States:
**DE GB SE**

(56) References cited:
**EP-A- 0 079 678**
**EP-A- 0 081 195**

(73) Proprietor: **NGK INSULATORS, LTD.**
**2-56, Suda-cho, Mizuho-ku**
**Nagoya-shi, Aichi 467(JP)**

(72) Inventor: **Soma, Takao**
**55-1 Aza-Ozakiyama Narumi-Cho Midori-Ku**
**Nagoya City Aichi Pref.(JP)**
Inventor: **Takahashi, Tomonori**
**85-2 Aza-Kitabatake Shinmaiko**
**Chita City Aichi Pref.(JP)**

(74) Representative: **Paget, Hugh Charles Edward**
**et al**
**MEWBURN ELLIS & CO. 2/3 Cursitor Street**
**London EC4A 1BO(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a process for manufacturing a silicon nitride sintered body.

According to a conventional process for producing a silicon nitride sintered body, a sintering aid which forms a liquid phase in grain boundaries, such as $Y_2O_3$, $Al_2O_3$, $MgO$, etc. is added to a raw material powder of silicon nitride, and a molding obtained from the resulting mixture is fired in an $N_2$ atmosphere or a mixed atmosphere of $N_2$ and an inert gas. Such an atmosphere may be under pressure. For instance, Japanese Patent Publication No. 58-49,509 discloses a process for performing firing in an $N_2$ atmosphere under pressure or in a mixed atmosphere of $N_2$ and an inert gas under pressure.

In these cases, a carbonaceous heater or a firing jig is ordinarily used, and the atmosphere is an $N_2$ atmosphere or a mixed atmosphere with a low $O_2$ partial pressure in which the amount of $O_2$ present as an impurity in the $N_2$ gas is reduced.

$SiO_2$, which is inherently present in the oxide additive and the silicon nitride raw material and serves as a sintering aid, forms a glass in grain boundaries through reaction and effectively aids densification of a structure and formation of a fine structure. However, in the above-mentioned conventional processes, when the silicon nitride molding is fired in an $N_2$ atmosphere or an $N_2$ atmosphere under pressure, with a low $O_2$ partial pressure, as shown in the following expressions (1) and (2), the oxide additive and $SiO_2$ evaporate from the glass phase, or are nitrided. Thereby, the ratio between O and N in the glass phase varies so that the composition of the glass phase at the grain boundary changes.

Evaporation reaction of

$$SiO_2 : SiO_2 \leftrightarrows SiO_2 + \tfrac{1}{2}O_2 \qquad (1)$$

Nitriding reaction of

$$SiO_2 : 3SiO_2 + 2N_2 \leftrightarrows Si_3N_4 + 3O_2 \qquad (2)$$

For this reason, the conventional process has the drawback that a sufficiently densified silicon nitride body cannot be obtained or a difference occurs in fine structure between the surface at which evaporation easily takes place and the inside portion at which the evaporation is difficult. Inferior properties of the fired surface result.

It is therefore an object of the present invention to eliminate or reduce the above-mentioned problem and to provide a process for producing a silicon nitride sintered body which suffers almost no deterioration of a fired surface resulting from the evaporation and nitriding reaction of $SiO_2$.

According to the present invention, there is provided a process for producing a silicon nitride sintered body, which comprises molding a mixed powder of a starting material and a sintering aid, and firing the resulting molding in an $N_2$ atmosphere or a mixed atmosphere of $N_2$ and an inert gas in which $CO_2$ or a mixed gas of $CO_2$ and $CO$ is present. The amount of $CO_2$ present is not less than 0.001%. By this measure, the $O_2$ partial pressure is increased to restrain the evaporation of $SiO_2$ and the nitriding of $SiO_2$ when the molding is fired.

A desired $O_2$ partial pressure can be selectively determined depending upon an equilibrium $O_2$ partial pressure, the evaporation speed and the nitriding speed in the evaporation and nitriding reactions of $SiO_2$, and the firing time at the firing temperature.

To increase this $O_2$ partial pressure, $CO_2$ or a mixed gas of $CO_2$ and $CO$ is in the invention mixed into the $N_2$ atmosphere or the mixed atmosphere of $N_2$ and inert gas. Thereby, the $O_2$ partial pressure is increased by utilizing the equilibrium $O_2$ partial pressure resulting from the $CO_2$ dissociation reaction shown by the following expressions (3) and (4).

Equilibrium reactions of $CO_2$:

$$CO_2 \leftrightarrows CO + \tfrac{1}{2}O_2 \qquad (3)$$
$$CO_2 \leftrightarrows C + O_2 \qquad (4)$$

The reason why $CO_2$ or the mixed gas of $CO_2$ or $CO$ is selected as an addition gas to enhance the $O_2$ partial pressure in the present invention is that by controlling the $O_2$ partial pressure through the $CO_2$ dissociation reactions, damage to a carbonaceous heater, a jig, etc. frequently used for firing the silicon nitride sinterable body are reduced and that a range of the $O_2$ partial pressure can be appropriately selected and can be easily controlled.

The reason why 0.001% or more of $CO_2$ is favourably mixed into the $N_2$ atmosphere or the mixed

atmosphere of $N_2$ and the inert gas is that no effect is recognized when less than 0.001% is present because less than 0.001% is lower than the impurity content usually present in $N_2$ gas. More preferably, the $CO_2$ content of the firing atmosphere is at least 0.1%.

On the other hand, if the added amount of $CO_2$ is too great, the $O_2$ partial pressure may become too high so that the oxidation reaction of $Si_3N_4$ unfavourably becomes noticeable. The maximum $CO_2$ content is preferably 50%, more preferably 25%. The reason why the total pressure of the $N_2$ atmosphere or the mixed atmosphere is preferably set at not less than 1 atm., is that the oxidation reaction of $Si_3N_4$ can be restrained and firing can be performed by increasing the $N_2$ partial pressure even when the $O_2$ partial pressure is high. Thus, the evaporation of the $SiO_2$ can be effectively restrained.

In summary, the $O_2$ partial pressure is raised to restrain the evaporation of $SiO_2$. The $O_2$ partial pressure is increased and balanced with the $N_2$ partial pressure to restrain the nitriding of $SiO_2$. Further, the $N_2$ partial pressure is increased and balanced with the $O_2$ partial pressure to restrain the oxidation of $Si_3N_4$.

Furthermore, when CO is added to the firing atmosphere together with $CO_2$, the CO formation reaction shown in the following formula (5) is inhibited and the amount of carbon (C) consumed is decreased, thereby reducing damage of the carbonaceous heater, jig, etc. frequently used in the firing of the silicon nitride sinterable body.

CO formation reaction:

$$CO_2 + C \rightarrow 2CO \qquad (5)$$

When CO is present the CO content is preferably at least 0.001%, more preferably at least 0.1%. It is preferable that the added amount of CO is greater than that of $CO_2$. However, if CO has a partial pressure higher than the equilibrium partial pressure of CO in the reaction shown by the formula (5), a reaction to form $CO_2$ and C reverse to the reaction shown in the formula (5) takes place so that carbon is produced and deposits on the silicon nitride sintered body or reacts with $SiO_2$ in the silicon nitride sinterable body. Thus, a CO partial pressure higher than the CO equilibrium partial pressure is unfavorable.

In addition, in order to reduce damage to the carbonaceous heater, jig, etc. in the firing furnace for the silicon nitride sinterable body and control the $O_2$ partial pressure in the firing furnace to an appropriate range, it may be that an $N_2$ gas or a mixed gas of $N_2$ and an inert gas which contains CO and $CO_2$ is prepared by passing $N_2$ gas or the mixed gas of $N_2$ and the inert gas which in either case contains one or more of $O_2$, $H_2O$, air, $CO_2$, etc. through a heater having a consumable carbon source therein, and is then introduced into the firing furnace for the silicon nitride sinterable body. Alternatively a gas containing CO and $CO_2$ is prepared by passing the gas comprising $O_2$, $H_2O$, air, $CO_2$, etc. through the heater having the carbon source and is then mixed into an $N_2$ gas or a mixed gas of $N_2$ and an inert gas, which is then introduced into the silicon nitride sinterable body-firing furnace.

Moreover, also in order to reduce damage to the carbonaceous heater, jig, etc. in the firing furnace for the silicon nitride sinterable body and control the $O_2$ partial pressure in the firing furnace to the appropriate range, it is possible that an $N_2$ gas or a mixed gas of $N_2$ and an inert gas containing CO and $CO_2$ is prepared by reacting an $N_2$ gas or a mixed gas of $N_2$ and the inert gas which in either case contains one or more of $O_2$, $H_2O$, air, $CO_2$, etc. with a consumable carbon source at an initial stage in the path of gas introduction to the firing furnace, and then introduced into a certain location of the heater of the jig in the firing furnace.

One typical process for manufacturing the silicon nitride sintered body according to the present invention will now be explained in more detail.

First, the silicon nitride powdery starting material is prepared. The silicon nitride powdery starting material is composed of a formulated powder of a silicon nitride raw material powder and a sintering aid. $Y_2O_3$, MgO, $Al_2O_3$ etc. is added as a sintering aid as it is or in the form of an aqueous solution. If appropriate, other raw material may be present, provided that silicon nitride predominates.

Next, the above silicon nitride starting material powder is crushed and mixed by means of a mill using media. Mills of a wet type and a dry type may be both used. For instance, a ball mill, an attrition mill, a vibration mill, etc. may be used. Then, the molding powder obtained is molded by a dry type press, injection molding, slip casting, etc., to obtain the desired molding.

The molding is fired in an $N_2$ atmosphere or a mixed atmosphere of $N_2$ and an inert gas into which $CO_2$ or a mixed gas of $CO_2$ and CO has been added. The firing temperature is preferably in the temperature range from 1,600°C to 2,000°C. The added amount of $CO_2$ to $N_2$ is not less than 0.001%. It is preferable that the total pressure of the $N_2$ atmosphere or the mixed atmosphere is not less than 1 atm. (1 x $10^5$ Pa).

The present invention will be illustrated below in more detail by the following non-limitative examples.

## Example 1

Various powders were formulated by adding a sintering aid to a silicon nitride powdery starting material of 97.1% by weight in purity with a content of oxygen being 1.5% by weight in the amounts shown in Table 1. After mixing and crushing by means of a water wet type ball mill, each powder was dried and granulated, thereby providing a molding powder. The molding powder was preliminarily molded, and then molded by a hydrostatic press under a pressure of 300 MPa (3 ton/cm$^2$,) to prepare a planar molding of 60x60x6 mm. Some moldings were fired in the atmosphere and at the temperature given in Table 1, thereby forming silicon nitride sintered bodies Nos. 1-12 by the process of the present invention. Further such moldings were fired in an atmosphere outside that of the process according to the present invention as given in Table 1, to provide silicon nitride sintered bodies Nos. 13-24 as comparative examples. The firing atmospheres given in Table 1 were controlled by supplying $N_2$, $CO_2$ and CO raw gases to the firing furnace in the amounts given in Table 1.

For the silicon nitride sintered bodies Nos. 1-24, Table 1 also shows the bulk density, the oxygen content, the four point bending strength when a fired face or an inside worked face was employed as a tensile face, and the amount of increased oxidation occurring per unit area in the fired face and the inside worked face when heated at 1,200°C in air for 100 hours. The bulk density and the four point bending strength were measured according to an Archimedes method and the fine ceramics bending strength testing method of JIS R-1601, respectively, for both the fired face and the inside worked face which was at a depth greater than 1 mm from the fired surface. The amount of of oxidation occurring on heating was determined from weight increase and surface area, for a sample whose whole surface was a fired surface and for a sample whose whole surface was an inside worked face at a depth not less than 1 mm from the fired surface.

4

## Table 1(a)

| | No. | Addition composition (wt%) | Firing conditions | | | | | Bulk density (g/cm³) | Oxygen content (wt%) | Four point bending strength (MPa) | | Increased amount of oxidation (mg/cm²) | |
| --- | --- | --- | --- | --- | --- | --- | --- | --- | --- | --- | --- | --- | --- |
| | | | Atmosphere | | | | Temperature (°C) | | | Fired face | Inside worked face | Fired face | Inside worked face |
| | | | $CO_2$ (%) | CO (%) | Balance (%) | Total pressure (atm) | | | | | | | |
| Present invention | 1 | MgO(5) | 0.001 | 0 | $N_2$ | 1 | 1750 | 3.18 | 4.2 | 680 | 710 | 0.8 | 0.8 |
| | 2 | MgO(3) | 0.1 | 0 | $N_2$ | 20 | 1900 | 3.20 | 3.3 | 820 | 880 | 0.6 | 0.6 |
| | 3 | $Al_2O_3$(5) | 10 | 1 | $N_2$ | 10 | 1850 | 3.16 | 3.8 | 650 | 700 | 0.1 | 0.1 |
| | 4 | $Al_2O_3$(3) | 20 | 2 | $N_2$ | 50 | 1900 | 3.15 | 3.0 | 720 | 800 | 0.1 | 0.1 |
| | 5 | $Y_2O_3$(5) | 0.1 | 0 | $N_2$ | 10 | 1900 | 3.26 | 3.4 | 870 | 920 | 0.2 | 0.2 |
| | 6 | $Y_2O_3$(3) | 1 | 0.2 | $N_2$ | 100 | 2000 | 3.24 | 2.8 | 900 | 950 | 0.2 | 0.2 |
| | 7 | $Y_2O_3$(5), MgO(5) | 0.01 | 0 | $N_2$ | 1 | 1700 | 3.26 | 5.3 | 820 | 860 | 0.3 | 0.3 |
| | 8 | $Y_2O_3$(3), MgO(3) | 1.5 | 0.1 | $N_2$ | 10 | 1850 | 3.28 | 4.4 | 970 | 1020 | 0.2 | 0.2 |
| | 9 | $Y_2O_3$(3), MgO(3) | 50 | 0 | $N_2$(50), Ar(50) | 50 | 1900 | 3.29 | 4.2 | 900 | 990 | 0.2 | 0.2 |
| | 10 | $Y_2O_3$(5), $Al_2O_3$(5) | 0.001 | 0 | $N_2$ | 1 | 1750 | 3.28 | 5.2 | 750 | 790 | 0.4 | 0.4 |
| | 11 | $Y_2O_3$(3), $Al_2O_3$(3) | 0.1 | 0.01 | $N_2$ | 300 | 1950 | 3.25 | 4.3 | 820 | 900 | 0.3 | 0.2 |
| | 12 | $Y_2O_3$(3), $Al_2O_3$(3) | 0.01 | 0 | $N_2$(50), Ar(50) | 10 | 1850 | 3.24 | 4.5 | 830 | 840 | 0.2 | 0.2 |

EP 0 225 087 B1

Table 1(b)

| No. | Addition composition (wt%) | Firing conditions | | | | | Bulk density (g/cm³) | Oxygen content (wt%) | Four point bending strength (MPa) | | Increased amount of oxidation (mg/cm²) | |
| | | Atmosphere | | | Total pressure (atm) | Temperature (°C) | | | Fired face | Inside worked face | Fired face | Inside worked face |
| | | $CO_2$ (%) | CO (%) | Balance (%) | | | | | | | | |
|---|---|---|---|---|---|---|---|---|---|---|---|---|
| 13 | MgO(5) | 0 | 0 | $N_2$ | 1 | 1750 | 3.10 | 3.3 | 480 | 650 | 1.8 | 1.2 |
| 14 | MgO(3) | 0 | 0 | $N_2$ | 20 | 1900 | 3.08 | 2.4 | 420 | 550 | 2.0 | 1.9 |
| 15 | $Al_2O_3$(5) | 0 | 0 | $N_2$ | 10 | 1850 | 3.10 | 2.9 | 400 | 550 | 0.7 | 0.2 |
| 16 | $Al_2O_3$(3) | 0 | 0 | $N_2$ | 50 | 1900 | 3.08 | 2.4 | 380 | 560 | 0.7 | 0.3 |
| 17 | $Y_2O_3$(5) | 0 | 0 | $N_2$ | 10 | 1900 | 3.16 | 2.6 | 420 | 620 | 0.9 | 0.5 |
| 18 | $Y_2O_3$(3) | 0 | 0 | $N_2$ | 100 | 2000 | 3.07 | 2.0 | 360 | 480 | 1.0 | 1.3 |
| 19 | $Y_2O_3$(5), MgO(5) | 0 | 0 | $N_2$ | 1 | 1700 | 3.17 | 4.2 | 580 | 630 | 0.5 | 0.3 |
| 20 | $Y_2O_3$(3), MgO(3) | 0 | 0 | $N_2$(50), Ar(50) | 10 | 1850 | 3.19 | 3.4 | 560 | 680 | 0.9 | 0.2 |
| 21 | $Y_2O_3$(3), MgO(3) | 0 | 0 | $N_2$ | 50 | 1900 | 3.20 | 2.9 | 510 | 700 | 0.6 | 1.2 |
| 22 | $Y_2O_3$(5), $Al_2O_3$(5) | 0 | 0 | $N_2$ | 1 | 1750 | 3.22 | 4.0 | 470 | 700 | 0.8 | 0.6 |
| 23 | $Y_2O_3$(3), $Al_2O_3$(3) | 0 | 0 | $N_2$ | 300 | 1950 | 3.19 | 2.8 | 480 | 670 | 1.1 | 0.8 |
| 24 | $Y_2O_3$(3), $Al_2O_3$(3) | 0 | 0 | $N_2$(50), Ar(50) | 10 | 1850 | 3.19 | 2.9 | 510 | 650 | 0.9 | 0.4 |

Comparative example

It is clear from Table 1 that, as compared with the products of the conventional process, the sintered bodies of the invention having the same composition are denser and exhibit more uniform four point bending strength and oxidation resistance at the fired surface and at the interior. With the process of the present invention, the silicon nitride sintered body suffers less or almost no deterioration of the fired surface resulting from the evaporation and nitriding reaction of $SiO_2$.

Moldings having the same composition as that of Sample No. 5 of the present invention in Example 1 were fired at 1900°C in respective atmospheres containing CO and $CO_2$ as shown in Table 2. As a result, sintered bodies each having approximately the same four point bending strength and increased amount of oxidation as in Sample No. 5 of the present invention with respect to the fired face and the inside worked face were obtained. At that time, a carbon pellet of 20 mm in diameter and 10 mm in height was placed and fired together with the silicon nitride sinterable body in the firing furnace. The resulting reduction of weight of carbon pellets due to the firing are also shown in Table 2.

As understood from Table 2, the weight reduction of the carbon pellet in the firing is reduced by mixing CO to the firing atmosphere. That is, damage of the carbonaceous heater or jig in the firing furnace can be reduced by addition of CO.

## Table 2

| | No. | Firing atmosphere | | | | Reduced weight of carbon pellet |
|---|---|---|---|---|---|---|
| | | $CO_2$ (%) | CO (%) | Balance (%) | Total pressure (atm) | |
| Present invention | 25 | 0.1 | 0 | $N_2$ | 10 | 0.5 |
| " | 26 | 0.1 | 0.05 | $N_2$ | 10 | 0.4 |
| " | 27 | 0.1 | 0.1 | $N_2$ | 10 | 0.15 |
| " | 28 | 0.1 | 1 | $N_2$ | 10 | 0.05 |

## Claims

1. A process for manufacturing a silicon nitride sintered body, which comprises molding a mixed powder of a starting material and a sintering aid, and firing the resulting molding in an $N_2$ atmosphere or a mixed atmosphere of $N_2$ and an inert gas
characterised in that said atmosphere contains added $CO_2$ or an added mixture of $CO_2$ and CO and the amount of $CO_2$ in the firing atmosphere is not less than 0.001%.

2. A process according to claim 1 wherein the total pressure of the firing atmosphere is not less than 1 x $10^5$ Pa (1 atm.)

3. A process according to claim 1 or 2 wherein the said atmosphere contains a mixture of $CO_2$ and CO in which the partial pressure of CO is greater than that of $CO_2$.

4. A process according to any of claims 1 to 3, wherein the partial pressure of the mixed CO in the firing atmosphere is lower than the equilibrium CO partial pressure in the reaction of the following formula:

$$CO_2 + C \rightleftarrows 2CO$$

## Revendications

1. Procédé de fabrication d'un corps fritté en nitrure de silicium qui consiste à mouler une poudre mélangée d'une matière première et d'un auxiliaire de frittage et à cuire le moulage résultant dans une atmosphère de $N_2$ ou une atmosphère mélangée de $N_2$ et d'un gaz inerte,

EP 0 225 087 B1

caractérisé en ce que ladite atmosphère contient $CO_2$ ajouté ou un mélange ajouté de $CO_2$ et de $CO$ et la quantité de $CO_2$ dans l'atmosphère de cuisson ne dépasse pas 0,001%.

**2.** Procédé selon la revendication 1 où la pression totale dans l'atmosphère de cuisson n'est pas inférieure à $1 \times 10^5$ Pa (1 atm.).

**3.** Procédé selon la revendication 1 ou 2 où ladite atmosphère contient un mélange de $CO_2$ et de $CO$ où la pression partielle de $CO$ est plus importante que celle de $CO_2$.

**4.** Procédé selon l'une quelconque des revendications 1 à 3 où la pression partielle de $CO$ mélangé dans l'atmosphère de cuisson est inférieure à la pression partielle de $CO$ à l'équilibre, dans la réaction de la formule suivante :

$$CO_2 + C \rightleftharpoons 2CO$$

**Patentansprüche**

**1.** Verfahren zur Herstellung eines Sinterkörpers auf Siliziumnitrid, das das Formen einer Pulvermischung aus einem Ausgangsmaterial und einem Sinterhilfsmittel und das Brennen des erhaltenen Formkörpers in einer $N_2$-Atmosphäre oder in einer Mischatmosphäre aus $N_2$ und einem Inertgas umfaßt, dadurch gekennzeichnet, daß die genannte Atmosphäre hinzugefügtes $CO_2$ oder eine hinzugefügte Mischung aus $CO_2$ und $CO$ enthält und der Anteil an $CO_2$ in der Brennatmosphäre nicht geringer als 0,001% ist.

**2.** Verfahren nach Anspruch 1, worin der Gesamtdruck der Brennatmosphäre nicht geringer als $1 \times 10^5$ Pa (1 atm) ist.

**3.** Verfahren nach Anspruch 1 oder 2, worin die genannte Atmosphäre eine Mischung aus $CO_2$ und $CO$ enthält, in der der Partialdruck von $CO$ größer als der von $CO_2$ ist.

**4.** Verfahren nach einem der Ansprüche 1 bis 3, worin der Partialdruck des der Brennatmosphäre beigemischten $CO$ geringer als der Gleichgewichts-$CO$-Partialdruck in der Reaktion der folgenden Formel ist:

$$CO_2 + C \rightleftharpoons 2CO$$

8